# EUROPEAN PATENT SPECIFICATION

(11) **EP 1 619 710 B1**
(45) Date of publication and mention of the grant of the patent: **21.03.2012**
(21) Application number: 05014807.1
(22) Date of filing: 07.07.2005
(51) Int. Cl.: H01H 59/00

(54) **Vibration type MEMS switch and fabricating method thereof**
Mikroelektromechanischer Schalter des Vibrationstyps und Herstellungsverfahren
Commutateur microélectromécanique du type à vibrations et procédé de fabrication

(30) Priority: 20.07.2004 KR 2004056579
(43) Date of publication of application: 25.01.2006
(73) Proprietor: SAMSUNG ELECTRONICS CO., LTD., Suwon-si, Gyeonggi-do (KR)
(72) Inventor: Lee, Moon-chul, Gwonseon-gu, Suwon-si, Gyeonggi-do (KR); Park, Tae-sik, Yeongtong-dong,Yeongtong-gu,Gyeonggi-do (KR); Jeong, Hee-moon, Yongin-si, Gyeonggi-do (KR)
(74) Representative: Grünecker, Kinkeldey, Stockmair & Schwanhäusser

(56) References cited:
- EP-A- 1 146 532
- EP-A- 1 388 875
- WO-A-03/083886
- US-A1- 2003 090 346
- NGUYEN, C.T.-C.: "Transceiver front-end architectures using vibrating micromechanical signal processors" TOPICAL MEETING ON SILICON MONOLITHIC INTEGRATED CIRCUITS IN RF SYSTEMS, 2001, 12 December 2001 (2001-12-12), pages 23-32, XP002377422 ANN ARBOR, MI

## Description

### CROSS-REFERENCE TO RELATED APPLICATIONS

This application claims priority from Korean Patent Application No. 2004-56579, filed July 20, 2004, in the Korean Intellectual Property Office.

### BACKGROUND OF THE INVENTION

### Field of the Invention

The present invention relates to a vibration type MEMS switch and a fabricating method thereof. More particularly, the present invention relates to a vibration type MEMS switch turned on and off even at a low voltage using a resonance of a vibrating body vibrating in a predetermined direction and a fabricating method thereof.

### Description of the Related Art

With the development of the communication industry, cellular phones have been popularized. Thus, various types of cellular phones are used all over the world. Radio frequency (RF) switches are used in cellular phones to distinguish different frequency band signals. Conventionally, filter type switches are used in cellular phones. However, a leakage signal may occur between a transmitter and a receiver. Thus, there have been made attempts to use mechanical switches adopting a Micro Electro Mechanical Systems (MEMS) technique. MEMS indicates a technique for fabricating a micro unit structure using a semiconductor process technique.

In general, cellular phones use small capacity batteries so as to be portable. Therefore, a low voltage drive type switch, which is normally turned on and off using a low voltage, may be used in such a cellular phone. However, in the case of the low voltage drive type switch, a gap between a switch lever and a contact point constituting the low voltage drive type switch must be several µm or less. Thus, it is difficult to fabricate the low voltage drive type switch. In other words, the switch lever and the contact point may stick to each other in a process of fabricating the low voltage drive type switch.

During the use of the low voltage drive type switch, moisture or the like is formed in the gap so that the switch lever and the contact point stick to each other.

Also, the switch lever must be made of a material having low hardness so that the switch lever normally shifts when a low voltage is applied. In this case, when the low voltage drive type switch is turned on, the low voltage drive type switch may normally operate. However, the low voltage drive type switch may not be normally turned off due to a low restoring force caused by the low hardness. If a material having high hardness is used to solve such a problem, the low voltage drive type switch is not normally turned off even at a low voltage.

WO 03/083886 A discloses a MEM switch device comprising contact electrodes a nd actuation electrodes, one of each positioned on a flexible arm. An electrical actuation means that applies an inter-electrode potential difference between the actuation electrodes when the switch is in use comprises a latch means for applying a constant latch potential difference and a resonance means for varying the inter-electrode potential difference in such a manner that mechanical resonance occurs in the flexible arm, thereby bringing the contact electrodes in contact. Also US 2003/0090346 A1 discloses a resonant operation of a MEM switch, wherein a voltage supply system has a capability of supplying a voltage with a frequency corresponding to the resonance frequency of the switch to two control electrodes. To the same electrodes a constant voltage is applied during resonance so that the switch closes the gap between a pair of contact electrodes.

### SUMMARY OF THE INVENTION

Accordingly, the present general inventive concept has been made to solve the above-mentioned problems, and an aspect of the present general inventive concept is to provide a vibration type MEMS switch including a vibrating body so as to be normally turned on and off even at a low voltage and a fabricating method thereof as disclosed in the claims.

According to an aspect of the present invention, there is provided a vibration type MEMS switch including: a vibrating body supplied with an alternating current voltage of a predetermined frequency to vibrate in a predetermined direction; and a stationary contact point spaced apart from the vibrating body along a vibration direction of the vibrating body. Here, if a direct current voltage with a predetermined magnitude is applied to the stationary contact point, a vibration margin of the vibrating body may be increased, and thus the vibrating body may contact the stationary contact point.

The vibration type MEMS switch may further include: a first electrode applying the direct current voltage to the stationary contact point; and a second electrode applying the alternating current voltage to the vibrating body.

The second electrode may apply the alternating current voltage having an identical frequency to a resonance frequency of the vibrating body.

The vibration type MEMS switch may further include at least one spring coupling the vibrating body and the second electrode to transmit the alternating current voltage to the vibrating body and supporting a vibration of the vibrating body.

The vibration type MEMS switch may further include: a first substrate including an upper surface including a predetermined area that is etched to form a cavity; and a second substrate including a surface including a predetermined area that is etched to form an etch area coupled to the stationary contact point. Here, the first substrate is combined with the second substrate so that the cavity and the stationary contact point are spaced apart from the vibrating body and so that the vibrating body is isolated in a sealed vacuum space.

The vibration type MEMS switch may further include a stopper stopping the vibration of the vibrating body when the vibrating body contacts the stationary contact point.

The vibration type MEMS switch may further include a drive sensor spaced apart from the vibrating body along the vibration direction of the vibrating body and sensing variations in a magnitude of an electric signal induced by the vibration of the vibrating body to detect a vibration frequency of the vibrating body.

A according to another aspect of the present invention, there is provided a vibration type MEMS switch including: a substrate; a vibrating body spaced apart from a surface of the substrate to vibrate in a direction parallel with the surface of the substrate; a stationary contact point spaced apart from the vibrating body along a vibration direction of the vibrating body; and a switching driver increasing a vibration margin of the vibrating body when a direct current voltage with a predetermined magnitude is applied, so that the vibrating body contacts the stationary contact point.

The vibration type MEMS switch may further include: an electrode applying an alternating current voltage of a predetermined frequency to the vibrating body; and at least one spring coupling the vibrating body and the electrode to transmit the alternating current voltage to the vibrating body and supporting a vibration of the vibrating body.

The vibration type MEMS switch may further include: a packaging substrate including a surface including a predetermined area that is etched to form an etch area and combined with the substrate so that the etch area is spaced apart from the vibrating body so as to isolate the vibrating body in a sealed vacuum space.

The vibration type MEMS switch may further include a stopper stopping the vibration of the vibrating body when the vibrating body contacts the stationary contact point.

The vibration type MEMS switch may further include a drive sensor spaced apart from the vibrating body along the vibration direction of the vibrating body and sensing variations in a magnitude of an electric signal induced by the vibration of the vibrating body to detect a vibration frequency of the vibrating body.

According to still another aspect of the present invention, there is provided a method of fabricating a vibration type MEMS switch, including: etching a predetermined area of a surface of a first substrate to form a stationary contact point in the etched area; stacking a conductive material on an upper surface of a second substrate in a predetermined pattern to form a vibrating body; bonding the first substrate to the second substrate so that the vibrating body is spaced apart from the stationary contact point; etching a predetermined area of a lower surface of the second substrate to secure a space in which the vibrating body is to vibrate; and bonding a third substrate to the lower surface of the second substrate to isolate the vibrating body in a sealed vacuum space.

The method may further include: etching a predetermined portion of the first substrate to form a passageway coupled to the stationary contact point; and burying a predetermined conductive material in the passageway to form an electrode electrically coupled to the stationary contact point.

### BRIEF DESCRIPTION OF THE DRAWINGS

The above aspects and features of the present invention will be more apparent by describing certain exemplary embodiments of the present invention with reference to the accompanying drawings, in which:

FIG. 1 is a vertical cross-sectional view of a vibration type MEMS switch according to an exemplary embodiment of the present invention;

FIGS. 2A and 2B are graphs illustrating a principle of operating the vibration type MEMS switch shown in FIG. 1;

FIG. 3 is a vertical cross-sectional view of a vibration type MEMS switch according to another exemplary embodiment of the present invention;

FIGS. 4A through 4F are cross-sectional views illustrating a method of fabricating the vibration type MEMS switch shown in FIG. 3;

FIG. 5 is a vertical cross-sectional view of a vibration type MEMS switch according to still another exemplary embodiment of the present invention; and

FIG. 6 is a cross-sectional view of a vibration type MEMS switch according to yet another exemplary embodiment of the present invention.

### DETAILED DESCRIPTION OF THE ILLUSTRATIVE NON-LIMITING

### EMBODIMENTS OF THE INVENTION

Certain exemplary embodiments of the present invention will be described in greater detail with reference to the accompanying drawings.

In the following description, same drawing reference numerals are used for the same elements even in different drawings. The matters defined in the description such as a detailed construction and elements are only provided to assist in a comprehensive understanding of the invention and are not intended to limit the scope of the invention in any way. Thus, it is apparent that the present invention can be carried out without those defined matters. Also, well-known functions or constructions are not described in detail since they would obscure the exemplary embodiments of the invention in unnecessary detail.

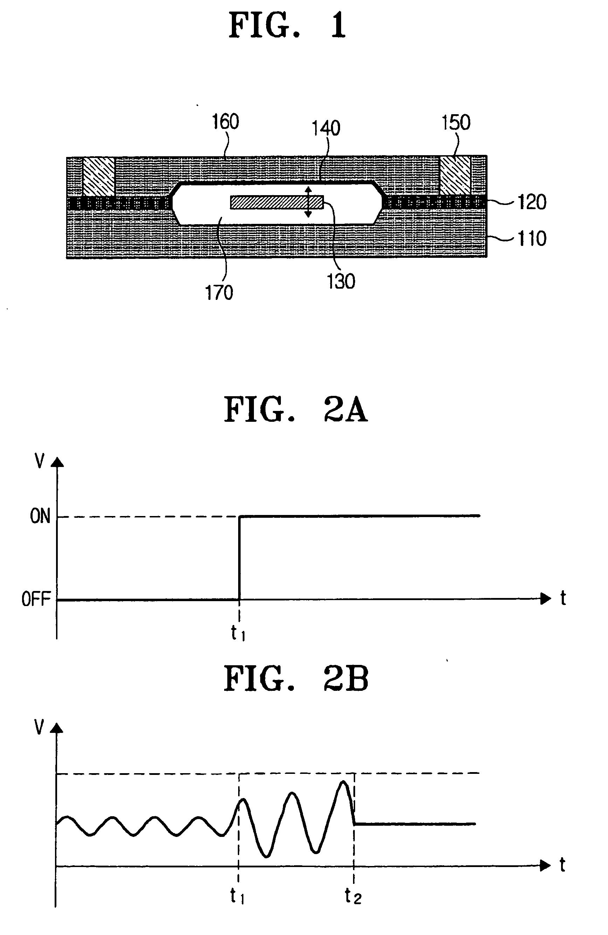

FIG. 1 is a vertical cross-sectional view of a vibration type MEMS switch according to an exemplary embodiment of the present invention. Referring to FIG. 1, the vibration type MEMS switch includes a first substrate 110, a conductive layer 120, a vibrating body 130, a stationary contact point 140, an electrode 150, a second substrate 160, and a cavity 170.

A predetermined area of an upper surface of the first substrate 110 is etched to form the cavity 170. The cavity 170 is formed to secure a space in which the vibrating body 130 can vibrate. The conductive layer 120 is stacked in the other area of the upper surface of the first substrate 110 except the cavity 170. A predetermined area of an upper portion of the conductive layer 120 is coupled to the stationary contact point 140, and the other area of the upper portion of the conductive layer 120 is coupled to the electrode 150. As a result, the conductive layer 120 serves to transmit an external power applied via the electrode 150 to the stationary contact point 140. The first substrate 110 may be a general glass substrate.

Since the vibrating body 130 is formed of a predetermined conductive material, the vibrating body 130 vibrates up and down due to an applied alternating current (AC) voltage. For this purpose, the vibration type MEMS switch further includes an electrode (not shown) for applying the AC voltage to the vibrating body 130 and a spring (not shown) supporting a vibration of the vibrating body 130. However, only a vertical cross-section of the vibrating body 130 is shown in FIG. 1. Thus, the electrode and the spring will be described in an exemplary embodiment that will be described later.

In this case, the vibrating body 130 is supplied with an AC voltage of a predetermined frequency and thus minutely vibrates. If a direct current (DC) voltage is applied to the electrode 150 in this state, the vibrating body 130 produces a resonance so as to increase a vibration margin. Thus, if the DC voltage is maintained for a predetermined period of time, the vibrating body 130 contacts the stationary contact point 140. As a result, the vibration type MEMS switch is turned on. In this case, since the vibration type MEMS switch uses the resonance, the vibration type MEMS switch may be driven at a low voltage of about 3V. In other words, if an AC voltage of about 1.5V is applied to the vibrating body 130, a direct current (DC) voltage of about 1.5V may be applied to the electrode 150 to turn on the vibration type MEMS switch. If the DC voltage is interrupted, the vibrating body 130 separates from the stationary contact point 140. Thus, the vibration type MEMS switch is normally turned off

If a signal to turn on the vibration type MEMS switch is input, a magnitude of the AC voltage applied to the vibrating body 130 for a predetermined period of time may be increased to reduce a gap between the vibrating body 130 and the stationary contact point 140. If a DC voltage is applied to the vibrating body 130 in this state, the vibration margin of the vibrating body 130 is increased to contact the stationary contact point 140. In other words, the magnitude of the AC voltage can be increased to well operate the vibration type MEMS switch. Also, a speed of turning on the vibration type MEMS switch can be increased. Alternatively, the vibrating body 130 may not be supplied with the AC voltage at ordinary times but may be supplied with the AC voltage only when the vibration type MEMS switch is turned on so as to vibrate.

The frequency of the AC voltage applied to the vibrating body 130 may match with a resonance frequency of the vibrating body 130 or a frequency around the resonance frequency, so as to well operate the vibration type MEMS switch. In other words, the AC voltage of the resonance frequency is applied to the vibrating body 130 so that the vibrating body 130 vibrates with a greater vibration margin in view of its hardness.

A space in which the vibrating body 130 vibrates may be sealed in a vacuum state so that the vibrating body 130 is smoothly vibrated and restored. In other words, the first and second substrates 110 and 160 form the sealed space in which the vibrating body 130 is isolated.
The stationary contact point 140 is formed along one direction of vibration directions of the vibrating body 130 so as to be spaced apart from the vibrating body 130. As shown in FIG. 1, the stationary contact point 140 is formed in an etched area of the second substrate 160. The stationary contact point 140 may be formed of a general conductive material such as aluminum (Al), tungsten (W), gold (Au), platinum (Pt), nickel (Ni), titanium (Ti), chrome (Cr), palladium (Pd), molybdenum (Mo), or the like.

FIGS. 2A and 2B are graphs illustrating a principle of operating the vibration type MEMS switch shown in FIG. 1. FIG. 2A is a graph illustrating an input signal to turn on the vibration type MEMS switch. Referring to FIG. 2A, a signal, i.e., a DC voltage of predetermined magnitude, to turn on the vibration type MEMS switch is applied to the stationary contact point 140 at a time t₁.

FIG. 2 is a graph illustrating an input signal supplied to the vibrating body 130. Referring to FIG. 2B, the vibrating body 130 produces a resonance at a time t₁ so as to contact the stationary contact point 140 at a time t₂.

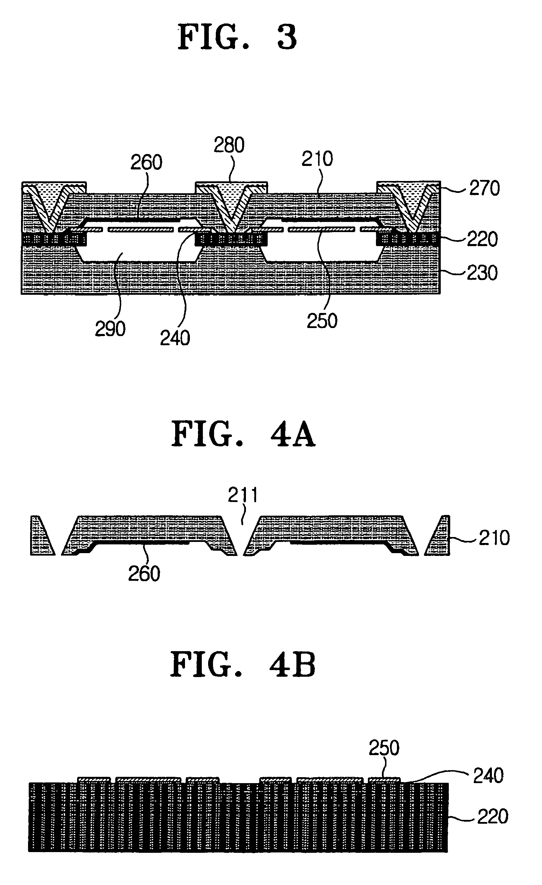

FIG. 3 is a vertical cross-sectional view of a vibration type MEMS switch according to another exemplary embodiment of the present invention. Referring to FIG. 3, the vibration type MEMS switch includes a first substrate 210, a second substrate 220, a third substrate 230, a buffer layer 240, a vibrating body 250, a stationary contact point 260, a conductive layer 270, an electrode 280, and a cavity 290.

A predetermined area of an upper surface of the first substrate 210 is etched to be bonded to the second substrate 220 so as to isolate the vibrating body 250 in a sealed vacuum space. In other words, the vibrating body 250 is fabricated on the second substrate 220, a predetermined area of a lower portion of the second substrate 220 is etched to secure a space in which the vibrating body 250 is to vibrate, and a lower surface of the second substrate 220 is bonded to the first substrate 210.

The buffer layer 240 may be stacked on the second substrate 220 to increase an adhesive strength so as to well stack the vibrating body 250 on the second substrate 220.

The stationary contact point 260 is formed on the lower surface of the first substrate 210 to be spaced apart from the vibrating body 250 along a vibration direction of the vibrating body 250. The conductive layer 270 and the electrode 280 are formed in a passageway penetrating through the first substrate 210 to transmit a DC voltage to the stationary contact point 260. As a result, if the DC voltage is applied to the stationary contact point 260, the vibrating body 250 may contact the stationary contact point 260.

FIGS. 4A through 4F are cross-sectional views illustrating a method of fabricating the vibration type MEMS switch shown in FIG. 3. Referring to FIG. 4A, a predetermined area of a lower surface of the first substrate 210 is etched, and a conductive material is stacked on a surface of the etched area so as to fabricate the stationary contact point 260. In this case, a predetermined area of the first substrate 210 may be etched to fabricate a passageway 211 penetrating through upper and lower portions of the first substrate 210. The passageway 211 serves to couple the stationary contact point 260 to an external power source.

As shown in FIG. 4B, the buffer layer 240 and a conductive material are stacked on a predetermined area of an upper surface of the second substrate 220, and then the vibrating body 250 is formed in a predetermined pattern. In this case, the vibrating body 250 is formed to a thin thickness enough to vibrate even at a low AC voltage.

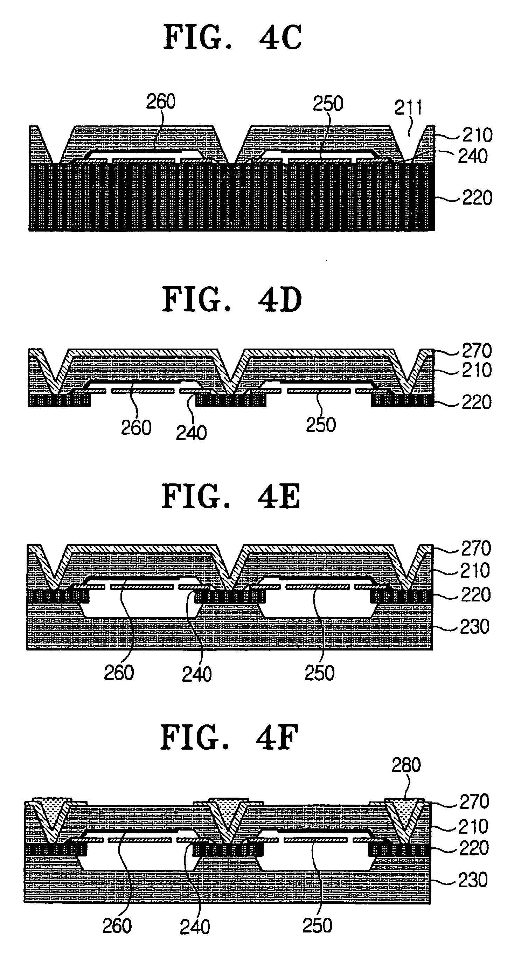

As shown in FIG. 4C, the first substrate 210 is bonded to the second substrate 220. In this case, the first substrate 210 is bonded to the second substrate 220 so that the stationary contact point 260 is spaced apart from the vibrating body 250. Also, the first substrate 210 may be bonded to the second substrate 220 using an anodic bonding method by which bonding is performed by applying a voltage.

As shown in FIG. 4D, a lower portion of the second substrate 220 is etched using a lapping process and a chemical mechanical polishing (CMP) process so as to expose the vibrating body 250. Also, a conductive material is stacked in the passageway 211 formed in the first substrate 210 to form the conductive layer 270. The conductive layer 270 is electrically coupled to the stationary contact point 260.

As shown in FIG. 4E, the third substrate 230 is bonded to the lower surface of the second substrate 220 to isolate the vibrating body 250 in the sealed vacuum space. In this case, a predetermined area of an upper surface of the third substrate 230 may be etched to a predetermined thickness to secure a space in which the vibrating body 250 can vibrate.

As shown in FIG. 4F, a conductive material is filled in the passageway 211 in which the conductive layer 270 is stacked to form the electrode 280. The electrode 280 serves to supply a DC voltage to the stationary contact point 260 via the conductive layer 270.

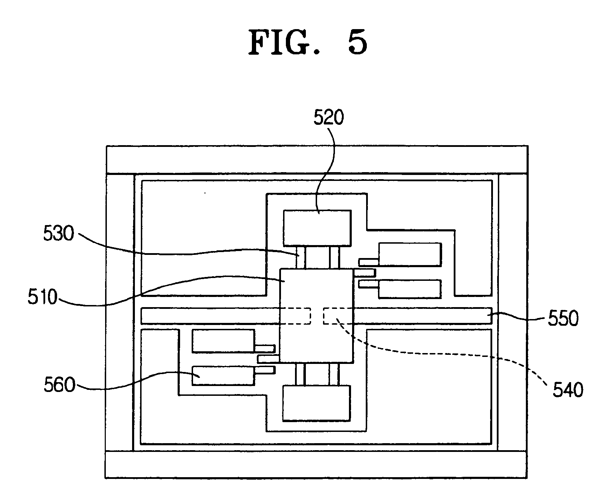

FIG. 5 is a vertical cross-sectional view of a vibration type MEMS switch according to still another exemplary embodiment of the present invention. Referring to FIG. 5, the vibration type MEMS switch includes a vibrating body 510, a first electrode 550, springs 530, a stationary contact point 540, a second electrode 520, and a stopper 560.

According to the present exemplary embodiment of the present invention, the vibrating body 510 vibrates up and down based on a substrate (not shown) positioned below the vibrating body 510. In this case, if a DC voltage is applied to the first electrode 550, a vibration margin of the vibrating body 510 is increased by a resonance so as to contact the stationary contact point 540. As a result, the vibration type MEMS switch is turned on.

An AC voltage is applied to the vibrating body 510 via the second electrode 520 to vibrate the vibrating body 510. The second electrode 520 is coupled to the vibrating body 510 via the springs 530. The springs 530 serve to transmit the AC voltage to the vibrating body 510 and support a vibration of the vibrating body 510. As shown in FIG. 5, four springs 530 fix the vibrating body 510 and the second electrode 520. However, the springs 530 may be fabricated in various numbers and shapes depending on the design of the vibration type MEMS switch.

The stopper 560 stops the vibration of the vibrating body 510 when the vibrating body 510 contacts the stationary contact point 540. Although the vibrating body 510 contacts the stationary contact point 540 with an increase in the vibration margin of the vibrating body 510, the vibrating body 510 may repel and thus separate from the stationary contact point 540. Thus, the stopper 560 stops the vibration of the vibrating body 510 so as to continuously turn the vibration type MEMS switch on. Although not shown in FIG. 5, a lower substrate may be coupled to an upper packaging substrate so as to isolate the vibrating body 510 in a vacuum space. According to another aspect of the present invention, the stopper 560 may not be used.

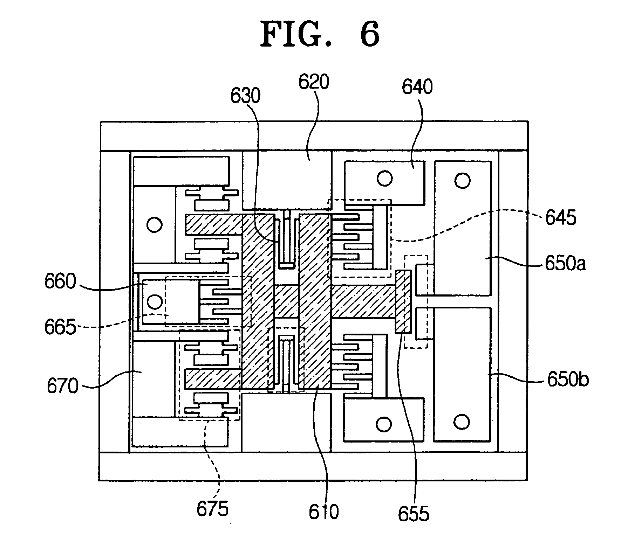

FIG. 6 is a cross-sectional view of a vibration type MEMS switch according to yet another exemplary embodiment of the present invention. Referring to FIG. 6, the vibration type MEMS switch includes a vibrating body 610, an electrode 620, a spring 630, a switching driver 640, stationary contact points 650a and 650b, a drive sensor 660, and a stopper 670. Although not shown in FIG. 6, the stationary contact points 650a and 650b may be designed and fabricated to be coupled to an external node when a DC voltage is applied but not to be coupled to the external node when an RF is applied.

According to the present exemplary embodiment, the vibrating body 610 is spaced apart from a surface of a substrate (not shown) positioned below the vibrating body 610 and supplied with an AC voltage so as to vibrate in a direction parallel with the surface of the substrate, i.e., in a horizontal direction. The AC voltage is applied via the electrode 620 and then transmitted to the vibrating body 610 via the spring 630. As described above, a frequency of the AC voltage may match with a resonance frequency.

A DC voltage is applied to the switching driver 640 so as to turn the vibration type MEMS switch on and/or off. In other words, if the DC voltage is applied to the switching driver 640, the vibrating body 610 resonates in a drive area 645. Thus, if a vibration margin of the vibrating body 610 is increased, the vibrating body 610 may contact the stationary contact points 650a and 650b. In this case, a magnitude of the AC voltage may be increased when the vibration type MEMS switch is turned on, so as to increase the vibration margin of the vibrating body 610, and then the DC voltage may be applied so that the vibrating body 610 contacts the stationary contact points 650a and 650b. The switching driver 640 may be combined with the vibrating body 610 in the drive area 645 to form a comb structure advantageous to driving of the vibration type MEMS switch.

If the vibration margin of the vibrating body 610 is increased, a contact area 655 of the vibrating body 610 directly contacts the stationary contact points 650a and 650b. Thus, the stationary contact points 650a and 650b are coupled to each other.

The drive sensor 660 is spaced apart from the vibrating body 610 along a vibration direction of the vibrating body 610. Thus, the drive sensor 660 senses variations in a magnitude of an electric signal induced by the vibration of the vibrating body 610 to detect a vibration frequency of the vibrating body 610. If the vibrating body 610 vibrates in this state, a distance between the drive sensor 660 and the vibrating body 610 varies in a drive sensing area 665 at every cycle. Thus, the drive sensor 660 senses the magnitude of the induced electric signal to detect the vibration frequency of the vibrating body 610. In this case, the induced electric signal may be an induction current, a capacitance, or the like. The sensed electric signal is fed back to an oscillator (not shown), which is coupled to the electrode 620 to apply an AC voltage, so that the oscillator adjusts the magnitude of the AC voltage so as to vibrate the vibrating body 610 at a frequency suitable for resonance.

The stopper 670 stops the vibration of the vibrating body 610 when the vibrating body 610 contacts the stationary contact points 650a and 650b, so as to prevent the vibrating body 610 from being separated from the stationary contact points 650a and 650b. More specifically, the stopper 670 contacts the vibrating body 610 in the stopping area 675 so that the stopper 670 can stop the vibration using friction with the vibrating body 610. For this purpose, an external controlling circuit (not shown) is coupled to the stopper 670 so as to control the operation of the stopper 670. As described above, the stopper 670 complements the operation of the vibration type MEMS switch and thus may not be included depending on the design of a user.

In the vibration type MEMS switch according to the present exemplary embodiment, the vibrating body 610 may be in a vacuum state so as to vibrate at a low level AC voltage and to be driven at a low level DC voltage. Thus, a lower substrate (not shown) may be coupled to an upper packaging substrate to package the vibrating body 610 so as to isolate the vibrating body 610 in a sealed vacuum space.

As described above, in a vibration type MEMS switch and a fabricating method thereof according to the exemplary embodiments of the present invention, the vibration type MEMS switch can be driven by a resonance. Thus, the vibration type MEMS switch can normally operate at a low voltage and thus can be easily used in devices such as cellular phones or the like using compact batteries. Since the vibration type MEMS switch uses the resonance, problems, such as sticking occurring in a process of fabricating a conventional low voltage drive type switch, sticking caused by moisture, or malfunctioning during turning off, can be solved. As a result, the vibration type MEMS switch can be stably turned on and/or off

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims.

## Claims

1. A vibration type MEMS switch comprising:
a vibrating body (130, 250, 510) supplied with an alternating current voltage of a predetermined frequency to vibrate in a predetermined direction; and
a stationary contact point (140, 260, 540) spaced apart from the vibrating body (130, 250, 510) along a vibration direction of the vibrating body,
wherein a frequency of the alternating current voltage is a resonance frequency of the vibrating body (130, 250, 510),
**characterized by**
having a direct current voltage with a predetermined magnitude is applied to the stationary contact point (140, 260, 540), in order to increase a vibration margin of the vibrating body, such that the vibrating body contacts the stationary contact point.

2. The vibration type MEMS switch of claim 1, further comprising:
a first electrode (150, 280, 550) applying the direct current voltage to the stationary contact point (140, 260, 540); and
a second electrode (520) applying the alternating current voltage to the vibrating body (130, 250, 510).

3. The vibration type MEMS switch of claim 2, wherein when a magnitude of the alternating current voltage applied via the second electrode (520) is increased to increase the vibration margin of the vibrating body (130, 250, 510), the direct current voltage is applied to the stationary contact point (140, 260, 540) via the first electrode (150, 280, 550) so that the vibrating body contacts the stationary contact point.

4. The vibration type MEMS switch of claim 2, further comprising:
at least one spring (530) coupling the vibrating body (130, 250, 510) and the second electrode (520) to transmit the alternating current voltage to the vibrating body, the at least one spring supporting a vibration of the vibrating body.

5. The vibration type MEMS switch of claim 1, further comprising:
a first substrate (110, 230) having an upper surface comprising a predetermined area that is etched to form a cavity (170, 290); and
a second substrate (160, 210) having a surface comprising a predetermined area that is etched to form an etch area, the stationary contact point (140, 260, 540) being coupled to the etch area,
wherein the first substrate (110, 230) is combined with the second substrate (160, 210) so that the cavity (140, 260) and the stationary contact point (140, 260, 540) are spaced apart from the vibrating body (130, 250, 510) and so that the vibrating body is isolated in a sealed vacuum space.

6. The vibration type MEMS switch of claim 5, further comprising:
a stopper (560) stopping the vibration of the vibrating body (510) when the vibrating body contacts the stationary contact point (540).

7. The vibration type MEMS switch of claim 5, further comprising:
a drive sensor (560) spaced apart from the vibrating body (510) along the vibration direction of the vibrating body and sensing variations in a magnitude of an electric signal induced by the vibration of the vibrating body to detect a vibration frequency of the vibrating body.

8. A vibration type MEMS switch comprising:
a substrate;
a vibrating body (610) spaced apart from a surface of the substrate to be supplied with an alternating current voltage to vibrate in a predetermined direction; and
a stationary contact point (650a, 650b) spaced apart from the vibrating body (610) along a vibration direction of the vibrating body;
wherein a frequency of the alternating current voltage is a resonance frequency of the vibrating body (610),
**characterized by**
applying a direct current with a predetermined magnitude to a switching driver (640), in order to increase a vibration margin of the vibrating body (610), such that the vibrating body contacts the stationary contact point (650a, 650b), and
in that the vibrating body vibrates in a direction parallel with the surface of the substrate.

9. The vibration type MEMS switch of claim 8, further comprising:
an electrode (620) applying an alternating current voltage of a predetermined frequency to the vibrating body (610); and
at least one spring (630) coupling the vibrating body (610) and the electrode (620) to transmit the alternating current voltage to the vibrating body, the at least one spring supporting a vibration of the vibrating body.

10. The vibration type MEMS switch of claim 9, further comprising:
a packaging substrate having a surface comprising a predetermined area that is etched to form an etch area and combined with the substrate so that the etch area is spaced apart from the vibrating body (610) so as to isolate the vibrating body in a sealed vacuum space.

11. The vibration type MEMS switch of claim 10, further comprising:
a stopper (670) stopping the vibration of the vibrating body (610) when the vibrating body contacts the stationary contact point (650a, 650b).

12. The vibration type MEMS switch of claim 10, further comprising:
a drive sensor (660) spaced apart from the vibrating body (610) along the vibration direction of the vibrating body and sensing variations in a magnitude of an electric signal induced by the vibration of the vibrating body to detect a vibration frequency of the vibrating body.

13. A method of fabricating a vibration type MEMS switch according to claim 1, comprising:
etching a predetermined area of a surface of a first substrate (210) and forming a stationary contact point (260) in the etched area;
stacking a conductive material on an upper surface of a second substrate (220) in a predetermined pattern to form a vibrating body (250);
bonding the first substrate (210) to the second substrate (220) so that the vibrating body (250) is spaced apart from the stationary contact point (260);
etching a predetermined area of a lower surface of the second substrate (220) to form a space in which the vibrating body (250) is to vibrate; and
bonding a third substrate (230) to the lower surface of the second substrate (220) to isolate the vibrating body (250) in a sealed vacuum space so that the vibrating body can vibrate when an alternating current voltage is supplied to it,
wherein a frequency of the alternating current voltage is a resonance frequency of the vibrating body (250).

14. The method of claim 13, further comprising:
etching a predetermined portion of the first substrate (210) to form a passageway coupled to the stationary contact point (260); and
filling in a predetermined conductive material in the passageway to form an electrode (280) electrically coupled to the stationary contact point (260).

## Patentansprüche

1. Schwingungs-MEMS-Schalter, enthaltend:
einen Schwingungskörper (130, 250, 510), der mit einer Wechselstromspannung einer vorbestimmten Frequenz versorgt wird, um in einer vorbestimmten Richtung zu schwingen; und
einen feststehenden Kontaktpunkt (140, 260, 540), der von dem Schwingungskörper (130, 250, 510) entlang einer Schwingungsrichtung des Schwingungskörpers beabstandet ist,
wobei eine Frequenz der Wechselstromspannung eine Resonanzfrequenz des Schwingungskörpers (130, 250, 510) ist,
**dadurch gekennzeichnet, dass**
eine Gleichstromspannung mit einer vorbestimmten Größe an dem stationären Kontaktpunkt (140, 260, 540) anliegt, um einen Schwingungsumfang des Schwingungskörpers zu erhöhen, so dass der Schwingungskörper den stationären Kontaktpunkt berührt.

2. Schwingungs-MEMS-Schalter nach Anspruch 1, weiterhin enthaltend:
eine erste Elektrode (150, 280, 550), die die Gleichstromspannung an den feststehenden Kontaktpunkt (140, 260, 540) anlegt; und
eine zweite Elektrode (520), die die Wechselstromspannung an den Schwingungskörper (130, 250, 510) anlegt.

3. Schwingungs-MEMS-Schalter nach Anspruch 2, bei dem, wenn eine Größe der Wechselstromspannung, die über die zweite Elektrode (520) anliegt, erhöht wird, um den Schwingungsumfang des Schwingungskörpers (130, 250, 510) zu erhöhen, die Gleichstromspannung an dem feststehenden Kontaktpunkt (140, 260, 540) über die erste Elektrode (150, 280, 550) derart anliegt, das der Schwingungskörper den feststehenden Kontaktpunkt berührt.

4. Schwingungs-MEMS-Schalter nach Anspruch 2, weiterhin enthaltend:
wenigstens eine Feder (530), die den Schwingungskörper (130, 250, 510) und die zweite Elektrode (520) koppelt, um die Wechselstromspannung auf den Schwingungskörper zu übertragen, wobei die wenigstens eine Feder eine Schwingung des Schwingungskörpers unterstützt.

5. Schwingungs-MEMS-Schalter nach Anspruch 1, weiterhin enthaltend:
ein erstes Substrat (110, 230), das eine Oberseite hat, die einen vorbestimmten Bereich enthält, der in Gestalt eines Hohlraumes (170, 290) geätzt ist; und
ein zweites Substrat (160, 210), das eine Oberfläche hat, die einen vorbestimmten Bereich enthält, der in Gestalt eines Ätzbereiches geätzt ist, wobei der feststehende Kontaktpunkt (140, 260, 540) mit dem Ätzbereich gekoppelt ist,
wobei das erste Substrat (110, 230) mit dem zweiten Substrat (160, 210) derart kombiniert ist, dass der Hohlraum (140, 260) und der feststehende Kontaktpunkt (140, 260, 540) von dem Schwingungskörper (130, 250, 510) beabstandet sind, und so, dass der Schwingungskörper in einem abgedichteten Vakuumraum isoliert ist.

6. Schwingungs-MEMS-Schalter nach Anspruch 5, weiterhin enthaltend:
einen Stopper (560), der die Schwingung des Schwingungskörpers (510) stoppt, wenn der Schwingungskörper den feststehenden Kontaktpunkt (540) berührt.

7. Schwingungs-MEMS-Schalter nach Anspruch 5, weiterhin enthaltend:
einen Steuersensor (560), der von dem Schwingungskörper (510) entlang der Schwingungsrichtung des Schwingungskörpers beabstandet ist und Änderungen einer Stärke eines elektrischen Signals erfasst, dass durch die Schwingung des Schwingungskörpers hervorgerufen wird, um eine Schwingungsfrequenz des Schwingungskörpers zu erfassen.

8. Schwingungs-MEMS-Schalter, enthaltend:
ein Substrat;
einen Schwingungskörper (610), der von einer Oberfläche des Substrates beabstandet ist, das mit einer Wechselstromspannung versorgt werden soll, um in einer vorbestimmten Richtung zu schwingen; und
einen feststehenden Kontaktpunkt (650a, 650b), der von dem Schwingungskörper (610) entlang einer Schwingungsrichtung des Schwingungskörpers beabstandet ist;
wobei eine Frequenz der Wechselstromspannung eine Resonanzfrequenz des Schwingungskörpers (610) ist,
**gekennzeichnet durch**
Anlegen eines Gleichstroms mit einer vorbestimmten Größe an eine Umschaltsteuereinrichtung (640), um einen Schwingungsumfang des Schwingungskörpers (610) derart zu erhöhen, dass der Schwingungskörper den feststehenden Kontaktpunkt (650a, 650b) berührt, und
**dadurch**, dass der Schwingungskörper in einer Richtung parallel zur Oberfläche des Substrates schwingt.

9. Schwingungs-IUIEMS-Schalter nach Anspruch 8, weiterhin enthaltend:
eine Elektrode (620), die eine Wechselstromspannung einer vorbestimmten Frequenz an den Schwingungskörper (610) anlegt; und
wenigstens eine Feder (630), die den Schwingungskörper (610) und die Elektrode koppelt, um die Wechselstromspannung auf den Schwingungskörper zu übertragen, wobei die wenigstens eine Feder eine Schwingung des Schwingungskörpers unterstützt.

10. Schwingungs-MEMS-Schalter nach Anspruch 9, weiterhin enthaltend:
ein Packsubstrat, das eine Oberfläche hat, die einen vorbestimmten Bereich enthält, der in Gestalt eines Ätzbereiches geätzt und mit dem Substrat derart kombiniert ist, dass der Ätzbereich von dem Schwingungskörper (610) beabstandet ist, um so den Schwingungskörper in einem abgedichteten Vakuumraum zu isolieren.

11. Schwingungs-MEMS-Schalter nach Anspruch 10, weiterhin enthaltend:
einen Stopper (670), der die Schwingung des Schwingungskörpers (610) stoppt, wenn der Schwingungskörper den feststehenden Kontaktpunkt (650a, 650b) berührt.

12. Schwingungs-MEMS-Schalter nach Anspruch 10, weiterhin enthaltend:
einen Steuersensor (660), der von dem Schwingungskörper (610) entlang der Schwingungsrichtung des Schwingungskörpers beabstandet ist und Änderungen einer Stärke eines elektrischen Signals erfasst, dass durch die Schwingung des Schwingungskörpers hervorgerufen wird, um eine Schwingungsfrequenz des Schwingungskörpers zu erfassen.

13. Verfahren zum Herstellen eines Schwingungs-MEMS-Schalters nach Anspruch 1, umfassend:
Ätzen eines vorbestimmten Bereiches einer Oberfläche eines ersten Substrates (210) und Ausbilden eines feststehenden Kontaktpunktes (260) in dem geätzten Bereich;
Stapeln eines leitfähigen Materials auf einer Oberseite eines zweiten Substrates (220) in einem vorbestimmten Muster, um einen Schwingungskörper (250) auszubilden;
Bonden des ersten Substrates (210) an das zweite Substrat (220) derart, dass der Schwingungskörper (250) von dem feststehenden Kontaktpunkt (260) beabstandet ist;
Ätzen eines vorbestimmten Bereiches einer Unterseite des zweiten Substrates (220), um einen Raum auszubilden, in dem der Schwingungskörper (250) schwingen soll; und
Bonden eines dritten Substrates (230) an die Unterseite des zweiten Substrates (220), um den Schwingungskörper (250) in einem abgedichteten Vakuumraum derart zu isolieren, dass der Schwingungskörper schwingen kann, wenn ihm eine Wechselstromspannung zugeführt wird,
wobei eine Frequenz der Wechselstromspannung eine Resonanzfrequenz des Schwingungskörpers (250) ist.

14. Verfahren nach Anspruch 13, weiterhin umfassend:
Ätzen eines vorbestimmten Abschnittes des ersten Substrates (210), um einen Durchgang auszubilden, der mit dem feststehenden Kontaktpunkt (260) gekoppelt ist; und
Einfüllen eines vorbestimmten leitfähigen Materials in den Durchgang, um eine Elektrode (280) auszubilden, die mit dem feststehenden Kontaktpunkt (260) elektrisch gekoppelt ist.

## Revendications

1. Commutateur MEMS de type vibratoire comprenant :
un corps vibratoire (130, 250, 510) alimenté par une tension électrique alternative ayant une fréquence prédéterminée afin de vibrer dans une direction prédéterminée ; et
un point de contact stationnaire (140, 260, 540) espacé du corps vibratoire (130, 250, 510) selon une direction vibratoire du corps vibratoire,
dans lequel une fréquence de la tension électrique alternative est une fréquence de résonance du corps vibratoire (130, 250, 510),
**caractérisé**
**en ce qu'**une tension électrique continue d'une grandeur prédéterminée est appliquée au point de contact stationnaire (140, 260, 540) de manière à augmenter une marge vibratoire du corps vibratoire, de manière à ce que le corps vibratoire entre en contact avec le point de contact stationnaire.

2. Commutateur MEMS de type vibratoire selon la revendication 1, comprenant en outre :
une première électrode (150, 280, 550) appliquant la tension électrique continue au point de contact stationnaire (140, 260, 540); et
une deuxième électrode (520) appliquant la tension électrique alternative au corps vibratoire (130, 250, 510).

3. Commutateur MEMS de type vibratoire selon la revendication 2 dans lequel, lorsqu'une grandeur de la tension électrique alternative appliquée via la deuxième électrode (520) est augmentée pour accroître la marge vibratoire du corps vibratoire (130, 250, 510), la tension électrique continue est appliquée au point de contact stationnaire (140, 260, 540) via la première électrode (150, 280, 550) de telle manière que le corps vibratoire entre en contact avec le point de contact stationnaire.

4. Commutateur MEMS de type vibratoire selon la revendication 2, comprenant en outre :
au moins un ressort (530) couplant le corps vibratoire (130, 250, 510) à la deuxième électrode (520) pour transmettre la tension électrique alternative au corps vibratoire, l'au moins un ressort supportant une vibration du corps vibratoire.

5. Commutateur MEMS de type vibratoire selon la revendication 1, comprenant en outre :
un premier substrat (110, 230) ayant une surface supérieure comprenant une surface prédéterminée qui est gravée pour former une cavité (170, 290) ; et
un deuxième substrat (160, 210) ayant une surface comprenant une surface prédéterminée qui est gravée pour former une surface de gravure, le point de contact stationnaire (140, 260, 540) étant couplé à la surface de gravure,
dans lequel le premier substrat (110, 230) est combiné au deuxième substrat (160, 210) de telle sorte que la cavité (140, 260) et le point de contact stationnaire (140, 260, 540) sont espacés du corps vibratoire (130, 250, 510) et de telle sorte que le corps vibratoire est isolé dans un espace vide scellé.

6. Commutateur MEMS de type vibratoire selon la revendication 5, comprenant en outre :
une butée (560) arrêtant la vibration du corps vibratoire (510) lorsque le corps vibratoire entre en contact avec le point de contact stationnaire (540).

7. Commutateur MEMS de type vibratoire selon la revendication 5, comprenant en outre :
un capteur de commande (560) espacé du corps vibratoire (510) selon la direction vibratoire du corps vibratoire et détectant des variations de grandeur d'un signal électrique induit par la vibration du corps vibratoire pour détecter une fréquence de vibration du corps vibratoire.

8. Commutateur MEMS de type vibratoire comprenant :
un substrat ;
un corps vibratoire (610) espacé d'une surface du substrat à alimenter par une tension électrique alternative pour vibrer dans une direction prédéterminée ; et
un point de contact stationnaire (650a, 650b) espacé du corps vibratoire (610) selon une direction vibratoire du corps vibratoire ;
dans lequel une fréquence de la tension électrique alternative est une fréquence de résonance du corps vibratoire (610),
**caractérisé**
**par** l'application d'un courant continu de grandeur prédéterminée à un pilote de commutation (640) de manière à augmenter une marge vibratoire du corps vibratoire (610), de manière à ce que le corps vibratoire entre en contact avec le point de contact stationnaire (650a, 650b), et
en ce que le corps vibratoire vibre dans une direction parallèle à la surface du substrat.

9. Commutateur MEMS de type vibratoire selon la revendication 8, comprenant en outre :
une électrode (620) appliquant une tension électrique alternative de fréquence prédéterminée au corps vibratoire (610) ;
au moins un ressort (630) couplant le corps vibratoire (610) et l'électrode (620) pour transmettre la tension électrique alternative au corps vibratoire, l'au moins un ressort supportant une vibration du corps vibratoire.

10. Commutateur MEMS de type vibratoire selon la revendication 9, comprenant en outre :
un substrat d'emballage ayant une surface comprenant une surface prédéterminée qui est gravée pour former une surface de gravure, et combiné au substrat de telle sorte que la surface de gravure est espacée du corps vibratoire (610) de manière à isoler le corps vibratoire dans un espace vide scellé.

11. Commutateur MEMS de type vibratoire selon la revendication 10, comprenant en outre :
une butée (670) arrêtant la vibration du corps vibratoire (610) lorsque le corps vibratoire entre en contact avec le point de contact stationnaire (650a, 650b).

12. Commutateur MEMS de type vibratoire selon la revendication 10, comprenant en outre :
un capteur de commande (660) espacé du corps vibratoire (610) selon la - direction vibratoire du corps vibratoire et détectant des variations de grandeur d'un signal électrique induit par la vibration du corps vibratoire pour détecter une fréquence de vibration du corps vibratoire.

13. Procédé de fabrication d'un commutateur MEMS de type vibratoire selon la revendication 1, comprenant :
la gravure d'une surface prédéterminée d'une surface d'un premier substrat (210) et la formation d'un point de contact stationnaire (260) dans la surface de gravure ;
l'empilement d'un matériau conducteur sur une surface supérieure d'un deuxième substrat (220) selon un motif prédéterminé pour former un corps vibratoire (250) ;
la liaison du premier substrat (210) au deuxième substrat (220) de telle manière que le corps vibratoire (250) est espacé du point de contact stationnaire (260) ;
la gravure d'une surface prédéterminée d'une surface inférieure du deuxième substrat (220) pour former un espace dans lequel le corps vibratoire (250) pourra vibrer ; et
la liaison d'un troisième substrat (230) à la surface inférieure du deuxième substrat (220) pour isoler le corps vibratoire (250) dans un espace vide scellé de telle sorte que le corps vibratoire puisse vibrer lorsqu'une tension électrique alternative y est appliquée,
dans lequel une fréquence de la tension électrique alternative est une fréquence de résonance du corps vibratoire (250).

14. Procédé selon la revendication 13, comprenant en outre :
la gravure d'une partie prédéterminée du premier substrat (210) pour former un passage couplé au point de contact stationnaire (260) ; et
le remplissage du passage à l'aide d'un matériau conducteur prédéterminé pour former une électrode (280) couplée électriquement au point de contact stationnaire (260).
